# EUROPEAN PATENT APPLICATION

(11) **EP 2 819 101 A1**
(43) Date of publication of application: **31.12.2014**
(21) Application number: 13305926.1
(22) Date of filing: 28.06.2013
(51) Int. Cl.: G06T 19/00

(54) **Mobile lighting for 3D Rendering**

(71) Applicant: Orange, 75015 Paris (FR)
(72) Inventor: Ottogalli, François-Gaël, 73190 CHALLES LES EAUX (FR); Szirtes, Thomas, LONDON, E15 4EN (GB)

(57) **Abstract**

Present system relates to a method for rendering a 3D image on a display element of a mobile device, the method comprising the acts of generating a 3D image, determining the lighting conditions at the mobile device location, lighting of the 3D image based on the determined lighting conditions, rendering the lit 3D image on the display element of the mobile device and characterized in that the determining act comprises capturing the location of the mobile device, querying a weather server to determine the lighting conditions at that location, capturing the orientation of the mobile device and determining the 3D lighting conditions on the mobile device based on the lighting conditions at that location and the orientation of the mobile device.

## Description

### FIELD OF THE PRESENT SYSTEM:

The present invention relates generally to 3D rendering, more particularly to the determination of lighting conditions to render a 3D image on a mobile device.

### BACKGROUND OF THE PRESENT SYSTEM:

Modern mobile devices have increasingly powerful graphics capabilities allowing them to display realistic 3D rendered interfaces or objects.

There are times when it is desirable to produce 3D rendered images that look like they are belong to the local environment where the device is in order to provide a more immersive experience. This is especially the case with Augmented Reality (AR) techniques. AR is a live view of a physical, real-world environment whose elements are augmented (or supplemented) by computer-generated sensory inputs (Wikipedia).

In particular, computer-generated 3D image or object may be inserted in the live view. Nevertheless, such computer-generated 3D objects do not integrate well in the live view as their lighting is not coherent with the real lighting of the local environment. This is particularly visible in strong lighting conditions, the shadow of the computer generated 3D object - if any - being incoherent with real objects shadows. Such situation is often met in outdoor conditions.

Indeed, there is a need to improve the rendering of 3D images, more particularly to improve the determination of the lighting condition used for the rendering.

### SUMMARY OF THE PRESENT SYSTEM:

It is an object of the present system to overcome disadvantages and/or make improvements in the prior art.

A method for rendering a 3D image on a display element of a mobile device, the method comprising the acts of generating a 3D image, determining the lighting conditions at the mobile device location, lighting of the 3D image based on the determined lighting conditions, rendering the lit 3D image on the display element of the mobile device, the method being **characterized in that** the determining act comprises capturing the location of the mobile device, querying a weather server to determine the lighting conditions at that location, capturing the orientation of the mobile device and determining the 3D lighting conditions on the mobile device based on the lighting conditions at that location and the orientation of the mobile device.

This advantageously allows producing 3D rendered images that look like they are belonging to the local environment where the device is in order to provide a more immersive experience to a user.

One object of the invention concerns a mobile device with means to generate a 3D image, determine the lighting conditions at the mobile device location, light the 3D image based on the determined lighting conditions, render the lit 3D image on the display element of the mobile device, wherein the determining the lighting conditions comprise capturing the location of the mobile device, querying a weather server to determine the lighting conditions at that location, capturing the orientation of the mobile device and determining the 3D lighting conditions on the mobile device based on the lighting conditions at that location and the orientation of the mobile device.

Another object of the invention concerns a computer program, in particular computer programs on or in an information medium or memory, suitable for implementing the method for determining the 3D lighting conditions on the mobile device based on the lighting conditions at that location and the orientation of the mobile device object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIG. 1 shows an exemplary embodiment of a mobile device in accordance with present system;
FIG. 2 shows an exemplary flowchart for determining lighting conditions to render a 3D image on a mobile device according to an embodiment of the present method;
FIG. 3 shows an exemplary illustration of a 3D image comprising shadow casts.
FIGs. 4A and 4B show an exemplary illustration of determining lighting conditions to render a 3D image on a mobile device according to the position of the mobile device.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

According to one embodiment of present system, a method can be implemented via applications or computer programs executed by an electronic device or mobile device 100. For clarity sake, it should be understood hereafter that writing "a mobile device does something" means "an application executed on a mobile device does something". Just like, "an application does something" should be understood as "an application executed by a mobile device does something".

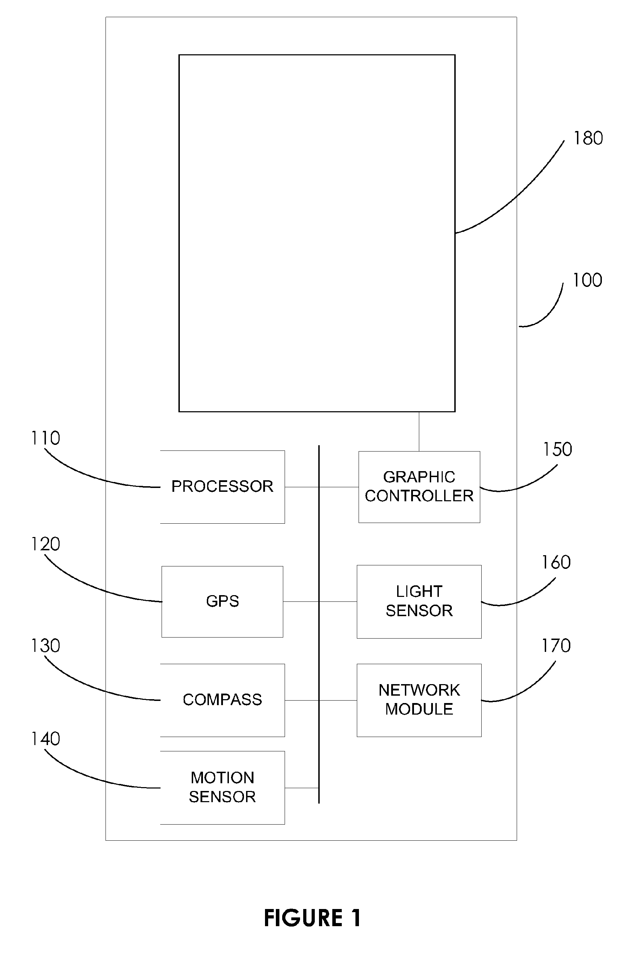

FIG. 1 is an illustration of an exemplary electronic device or mobile device 100 used in the present system. According to the different embodiment, the mobile device 100 may comprise a processor 110, a Global Positioning System (GPS) module 120, a compass 130, a motion sensor 140, a graphic controller 150, a light sensor 160 and a network module 170. The mobile device 100 may comprise other types of module, or different version of a previously listed type of module, or some module that may integrate the functions offered by said listed modules.

Some modules may be directly integrated within the mobile device 100. Some modules may be external, connected to the mobile device via short range communication technologies such as Bluetooth or USB connection.

The processor 110 can execute any applications or computer programs according to the embodiments of the present system. The man skilled in the art knows that processor 100 may comprise one or various processors or rely on distributed processor elements, possibly linked via the network element 170.

A GPS module 120 may be integrated in the mobile device 100, or may be connected to the mobile device 100 via a network module 170. For example, the mobile device 100 may be connected to an external GPS module 120 via Bluetooth™ or USB (Universal Serial Bus) connection. Such GPS module 120 is able to provide location and time information in all weather conditions, anywhere on or near the Earth where there is an unobstructed line of sight to four or more GPS satellites.

A compass module 130 may be integrated in the mobile device 100. Such compass module 130 shows directions in a frame of reference that is stationary relative to the surface of the earth. Such compass module 130 may be a magnetic compass. In short, such compass module 130 shows the magnetic north direction. But compass module 130 may also be a gyrocompass or a magnetometer, or any other type of compass according to the knowledge of the man skilled in the art.

A motion sensor module 140 may be integrated, detecting changes in position of an object relative to its surroundings. Motion detection can be achieved by both mechanical and electronic methods, possibly through the use of accelerometer. Compass and motion detection functions may be merged in a single module such as for example a gyrocompass.

The mobile device 100 may comprise a dedicated graphic controller 1500 or, possibly, the processor 110 may include such graphic controller 150. When the graphic controller 150 is dedicated (meaning external to the processor 110, possibly even external to the mobile device but connected to it via short range communication technique), it receives data inputs from the processor and generates a feed of output images to a display element 180. As 3D rendering requires heavy computational process, graphic controller 150 may integrate 3D functions in order to render 3D scene or images, discharging the processor of complex calculation.

The mobile device 100 may also comprise a camera, or a camera may be connected to the mobile device 100.

Hereafter, 3D object or 3D image should be understood as a geometric 3-parameters model of an object or a scene. Such 3D objects or images, generated by the processor 110, are used as inputs for the graphic controller 150 which render them on the display element 180. 3D functions of the graphic controller 150 are used during the rendering step. The rendering step may be interpreted as the representation of a 3D object on a display, which display could be 2D or 3D display.

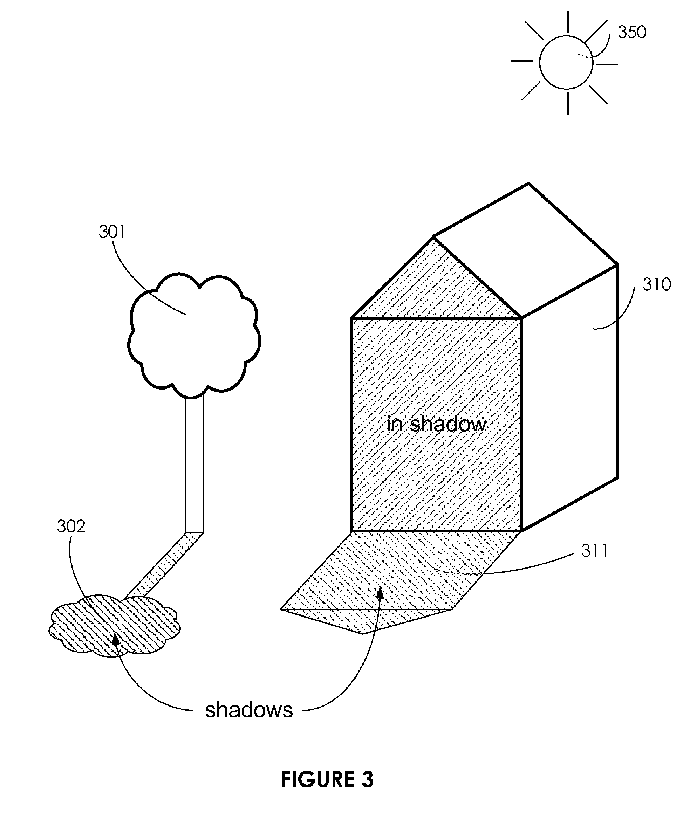

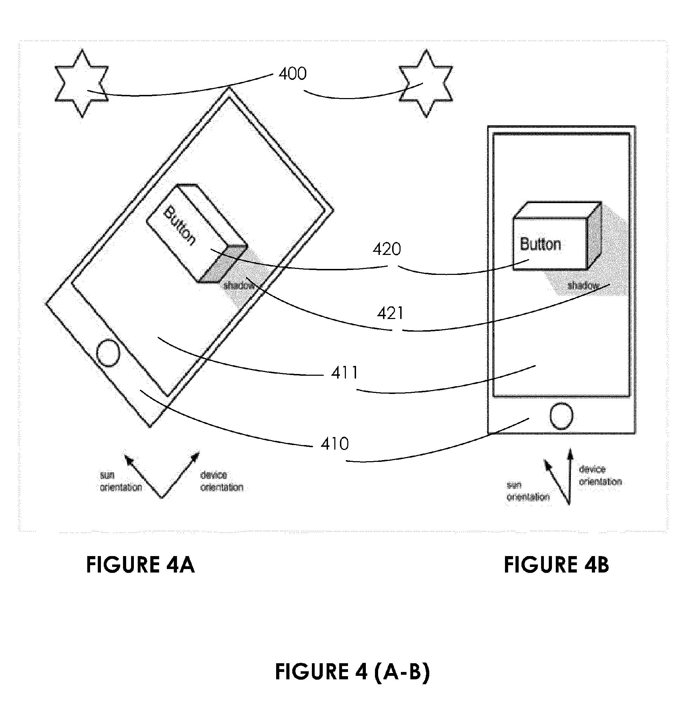

Once a 3D image or object has been generated, the rendering of this 3D object or image may comprise a step of lighting the 3D image. This step is often refers as to the shading of the 3D image. The man skilled in the art knows how to light a 3D image when given data such as light sources position and how to render the 3D image on a 2D or 3D display integrating such lighting or shading step. Such shading step, by determining shadow casts within the 3D image, makes the rendering look more realistic. FiG. 3 and FIG. 4 show examples of rendering of shadow casts on within 3D images.

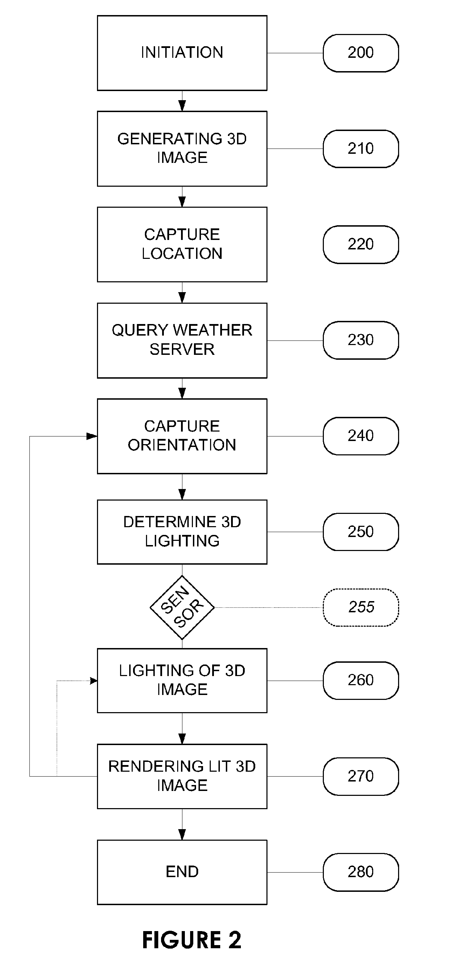

FIG. 2 shows an exemplary flowchart for determining lighting conditions to render a 3D image on a mobile device according to an embodiment of the present method;

In a first initiation step 200 an application using 3D rendering (images or video, as video should be considered as a continuous feed of images) is launched or executed on the mobile device 100. Such application may either display a generated 3D scene, or integrate the environment, through the use of a camera to capture a video feed, with some generated 3D objects. Augmented Reality (AR) applications are typically merging such video feed from a camera and 3D objects.

In a step 210, the processor generates a 3D image or object. This step can also be called a 3D modeling step, which consists in developing a mathematical representation of any three-dimensional object or image.

In a step 220, the mobile device captures its location. Such step can be performed through many techniques. Possibly the mobile device 100 can use the GPS module 120 or use the result of triangulation technique by the network operator. Such location may be very precise, if performed by the GPS module 120, or more imprecise if performed via triangulation or other technique not described here. It means that the location captured may be slightly different from the exact location of the mobile device 100. Level of precision could be from meters (captured from the GPS module 120), to kilometers (captured via the location of a BTS or RNC for example). In one complementary embodiment of present system, the mobile device 100 may request the user to manually enter the location of the mobile device 100, for example by displaying a map and requesting the user to define its location. Location should be understood as GPS coordinates, postal code, city name, postal address or any data allowing determining a location.

In a step 230, the mobile device 100 queries a weather server to determine the lighting conditions at that location. In other words, the mobile device 100 sends a message to a server, the message comprising the location captured during step 220 and a request for lighting conditions. Weather server should be understood as a server which can retrieve either directly or indirectly, lighting conditions associated to the received location. Lighting conditions depends on the location of the mobile device 100 and the time of the query. Indeed, according to the time, for a same location, lighting conditions will evolve, mainly according to the position of the sun and/or the moon. But others elements such as clouds, mists, fogs, rain may determine the lighting conditions. Indeed, the ratio between the direct light (sun or moon) and the indirect light (rain, mist, cloud and fog disperse the light from the sun or moon) may evolve according to weather conditions. For example, cloud coverage allows the mobile device 100 to estimate the color and intensity of the expected sunlight at that location. The mobile device 100 may estimate such lighting from data received from the weather server (for example, deducing a lighting condition from a percentage of cloud coverage) or may directly receive from the weather server data representing the lighting conditions. Ephemerides data, defining the position of the sun or moon at certain time, may also be used to determine the lighting condition. Indeed, from the position of the sun or moon and the location of the mobile device 100, it is possible to deduce a vector representing the orientation of the lighting from the sun or moon. Hence, the weather server sends in return to the mobile device 100 a message comprising lighting conditions. In one embodiment of present system, the lighting conditions are defined by a vector representing the orientation of the lighting associated to parameters characterizing the lighting. In a complementary embodiment of present system, a parameter characterizing the lighting represents a ratio between direct and indirect lighting. In another complementary embodiment of present system, the mobile device 100 receives ephemerides data from the weather server and calculate the vector representing the orientation of the lighting (that is to say, position of the sun or moon) using the ephemerides data.

It is to be noted that the position of the sun (for example its height in the sky) allows the application to also estimate the color of the sky that affects the ambient lighting. For example a sun lower in the sky will produce light that is more reddish in color than one higher. At night no sun will be visible, so the moons position can be used instead, and its color may also be different according to time or position. Said color may be a parameter characterizing the lighting.

In a step 240, the mobile device 100 captures its orientation. The mobile device 100 may use the compass module 130 and the motion sensor module 140 to capture its orientation. Orientation should be understood as any data allowing positioning the mobile device 100 relatively to its environment, more specifically the position of one part of the mobile device 100 (for example the display element 180) relatively to the environment. Such orientation could be represented as a 3 dimensional vector and could be defined relatively to a predetermined reference such as a 3-dimensional Euclidian reference system locally defined using local vertical direction, magnetic north direction and possibly west direction.

In a step 250, the mobile device 100 determines the 3D lighting conditions on the mobile device based on the lighting conditions at that location and the orientation of the mobile device 100. Indeed, the previous step 240 allows positioning the display of the mobile device 100 relatively to the lighting conditions determined in step 230. In short, the sun (or the moon) is positioned relatively to the display. Indeed, lighting conditions should be rendered differently on the mobile device display 180 if the mobile device 100 is oriented toward the sun or if on the contrary it is oriented back to the sun (or the moon). This step 250 could be seen as adapting the retrieved or calculated lighting conditions to the orientation of the mobile device 100. For example, knowing the position of the sun at the location of the mobile device 100 (at a certain time) and knowing the orientation of the mobile device 100, the position of the sun relatively to the display element 180 may be calculated.

In a step 260, the 3D image is lit using the preceding calculated lighting conditions on the mobile device 100. This lighting act comprises determining shadow casts within the 3D image based on the determined lighting conditions on the mobile device. The man skilled in the art knows how to light a 3D image using lighting conditions as inputs.

In a step 270, the mobile device 100 renders the lit 3D image on the display element of the mobile device. As graphic controller 150 may integrate 3D functions or lighting functions, steps 260 and 270 may be performed simultaneously by the graphic controller 150.

In a complementary embodiment of present system, an optional step 255 may be performed. This step 255 is performing a test to know whether to pursue with the method of present system or use another method (not described here). In this embodiment, the act of lighting of the 3D image based on the determined lighting conditions on the mobile device is carried out depending on information output from the light sensor. Indeed, the mobile device 100 may determine using the light sensor 160 an ambient lighting. As quite often such light sensor 160 is placed on the mobile device 100 next to the display 180 (as it is used commonly to adapt the luminosity of the display), the ambient lighting can be considered as a rough measure of the intensity of the lighting (direct and indirect) coming on the display. The mobile device, when the measured ambient lighting is below a certain level, may decide that the mobile device 100 is in indoor condition, and will not perform according to the method of determination of the lighting conditions (for example, shadows casts indoor are not due to the sun). Alternatively, the mobile device may compare the result of the lighting conditions on the mobile device 100 according to the system and the measured ambient lighting. If the result of the comparison is coherent, the mobile device deduces that the determined lighting conditions on the mobile correspond to the output of the sensor light, meaning that the mobile device 100 is indeed in outdoor conditions. In this case, the lighting is done according to the previously described method. Otherwise, the mobile device 100 will deduce that the determined lighting conditions on the mobile do not correspond to what is measured by the light sensor, and decide that it is not in outdoor conditions. IN this last case, the mobile device 100 may light the 3D image using another method not described here, possibly a method more adapted to indoor lighting conditions.

After step 270, the system may repeat the process from step 260 on another 3D image, in order to render a feed of output images to the display element 180 (in short, render a video) or may repeat the method from the step 240 if the orientation changes (that is to say, if the mobile device 100 has been moved).

In step 280, the application is closed; the rendering of 3D images on the display element 180 is stopped.

FIG. 3 shows an exemplary illustration of a 3D image comprising shadow casts. The sun 350 is displayed in order to show its position. The scene is viewed through a camera of a mobile device 100 and displayed on the display element 180. The tree 301 could be a real tree whereas the building or house 310 may be a 3D image or object designed by an architect, for example a house to be built next to the tree. Using AR technologies, a user may want to have a view of the future building "in situation". Using normal technologies, the house would be rendered on the display 180 without shadow cast, whereas the tree 301 - if there very sunny conditions - would have a noticeable shadow cast 302. The juxtaposition of an object (the tree) with a noticeable shadows cast and another one (the house) with no shadow cast would be disturbing for someone viewing the scene. Using present system, the mobile device is able to determine the lighting conditions on the mobile device 100 and to render a shadow cast 311 totally coherent with the context, that is to say similar to the shadow cast 302.

FIGs. 4A and 4B show an exemplary illustration of determining lighting conditions to render a 3D image on a mobile device according to the position or orientation of the mobile device.

In FIG. 4A the mobile device 410 or 100 has determined the lighting condition on itself. Thus, the mobile device 410 is able to render the shadow cast 421 of the 3D image or object 420, shadow cast calculated using the position and orientation of the mobile device 410 relatively to the sun 400.

From FIG. 4A to FIG. 4B, the mobile device 410 has been moved, the display element 180 or 411 is no more orientated toward the same direction. Its location may have changed, but, talking about weather conditions (for, mist, global enlightenment,) it would not have changed much moving the mobile device 100 along some meters. Nevertheless, the orientation, as calculated in step 240 of FIG. 2 has changed, so the lighting of the object 420 will be updated, and consequently the rendering of the 3D object 420, more precisely, the shadow cast 421 associated to the object 420.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the broader and intended spirit and scope of the present system as set forth in the claims that follow. Further, while exemplary illustrations were provided to facilitate an understanding of the present system, other system to determine the lighting conditions may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated;
i) the term "plurality of" an element includes two or more of the claimed element, and does not imply any particular range of number of elements; that is, a plurality of elements may be as few as two elements, and may include an immeasurable number of elements, and;
j) unless specified otherwise in the description of an embodiment of present system, the term "greater than" (respectively "lower than") should be understood as "strictly greater than" (resp. "strictly lower than") or "greater than or equal to" (resp. "lower than or equal to"), both implementation being possible.

## Claims

1. A method for rendering a 3D image on a display element of a mobile device, the method comprising the acts of:
- generating a 3D image,
- determining the lighting conditions at the mobile device location,
- lighting the 3D image based on the determined lighting conditions,
- rendering the lit 3D image on the display element of the mobile device, **characterized in that** the determining act comprises:
- capturing the location of the mobile device,
- querying a weather server to determine the lighting conditions at that location,
- capturing the orientation of the mobile device,
- determining the 3D lighting conditions on the mobile device based on the lighting conditions at that location and the orientation of the mobile device.

2. A method according to previous claim, wherein the lighting act comprises determining shadow casts within the 3D image based on the determined lighting conditions on and orientation of the mobile device.

3. A method according to any preceding claims wherein determining lighting conditions of the mobile device comprises an act of receiving from the weather server a vector representing the orientation of the lighting associated to parameters characterizing the lighting.

4. A method according to preceding claim, wherein a parameter characterizing the lighting represents a ratio between direct and indirect lighting.

5. A method according to claims 1 or 2, wherein determining lighting conditions of the mobile device comprises acts of:
- receiving from the weather server ephemerides data,
- calculating a vector representing the orientation of the lighting using ephemerides data.

6. A method according to any preceding claims, the mobile device comprising a light sensor, and wherein the acts of lighting of the 3D image based on the determined lighting conditions on the mobile device is carried out depending on information output from the light sensor.

7. A method according to any preceding claims, the mobile device comprising a GPS module, wherein capturing the location of the mobile device is done using the GPS module.

8. A mobile device comprising means for implementing the method of claim 1.

9. A mobile device comprising a GPS module and means to implement the method of claim 7.

10. An application embodied on a non-transitory computer readable medium and arranged to execute the method of claims 1 to 7.
